# EUROPÄISCHE PATENTSCHRIFT

(11) **EP 2 403 746 B1**
(45) Veröffentlichungstag und Bekanntmachung des Hinweises auf die Patenterteilung: **30.09.2015**
(21) Anmeldenummer: 10704918.1
(22) Anmeldetag: 05.02.2010
(51) Int. Cl.: B61L 27/00, B61L 23/04

(54) **FERNÜBERWACHUNG VON BETRIEBSPARAMETERN EINER FAHRLEITUNGSANLAGE**
REMOTE MONITORING OF OPERATING PARAMETERS OF A CONTACT LINE SYSTEM
TÉLÉSURVEILLANCE DE PARAMÈTRES DE FONCTIONNEMENT D'UNE INSTALLATION À LIGNE DE CONTACT

(30) Priorität: 04.03.2009 DE 102009011641; 06.05.2009 DE 102009020124
(43) Veröffentlichungstag der Anmeldung: 11.01.2012
(73) Patentinhaber: Siemens Aktiengesellschaft, 80333 München (DE)
(72) Erfinder: BLIETZ, Hans-Ulrich, 91054 Buckenhof (DE); DÖLLING, Andre, 91056 Erlangen (DE); EVERS, Daniel, 83624 Otterfing (DE); FAUBEL, Peter, 38154 Königslutter (DE); KUDEREWSKI, Georg, 91301 Forchheim (DE); PISTOR, Klaus, 85579 Neubiberg (DE); SCHMIEDER, Axel, 04288 Leipzig (DE); SCHNEIDER, Egid, 91085 Weisendorf (DE); WOLF, Armin, 91052 Erlangen (DE)
(86) Internationale Anmeldenummer: PCT/EP2010/051407
(87) Internationale Veröffentlichungsnummer: WO 2010/100006

(56) Entgegenhaltungen:
- US-A1- 2007 044 566
- US-A1- 2007 140 303
- US-A1- 2008 142 645
- US-A1- 2008 296 441

## Beschreibung

Die Erfindung betrifft die Überwachung von Betriebsparametern einer Fahrleitungsanlage mit Hilfe eines Netzwerkes aus Funksensorknoten.

Störungen in Fahrleitungsanlagen insbesondere von spurgebundenen Verkehrs- oder Transportmitteln, bspw. von Eisen-, Straßen-, S- oder U-Bahnen, im Folgenden der Kürze wegen allgemein als "Züge" bezeichnet, sind derzeit aufgrund des umfangreichen und komplexen Schienennetzes, auf dem die Züge verkehren, nur schwer detektierbar. Eine derartige Fahrleitungsanlage umfasst bekanntermaßen in der Regel mehrere Komponenten bzw. Bauteile wie etwa Isolatoren, Erdungsleitungen, Schalter, Radspanner etc. sowie untergeordnete Systeme wie bspw. eine Oberleitung und/oder eine Strom- bzw. Fahrschiene. Wegen der nichtredundanten Ausführung von Fahrleitungsanlagen können Schäden mit Funktionsverlust an Bauteilen zu Störungen des Zugverkehrs führen. Verspätungen im Zugverkehr können die Folge sein. Störungen können bspw. durch Kurzschlüsse, Ausfälle, Fehlfunktionen oder Überlastungen von Bauteilen im Fahrleitungsbereich verursacht werden.

Bisher gibt es lediglich komplexe automatisierte Lösungen, um Fahrleitungsanlagen zu überwachen und Störungen zu erkennen. Die dabei eingesetzten Sensoren benötigen Verkabelungen und eine externe Stromversorgung, was bei der Anordnung entlang von Bahn- bzw. Zugstrecken äußerst aufwendig ist. Bei vielen Störungen gibt es bisher keine technisch wirtschaftliche Lösung, z.B. wird bei Kurzschlüssen in der teilweise stark vermaschten Fahrleitungsanlage der 15kV/16,7Hz-Netze der unbekannte Kurzschlussort durch Begehen von Instandhaltungspersonal entlang der Strecke ermittelt, um Schäden aufzufinden und zu beurteilen. Der Fehlerort kann eingegrenzt werden, die Ungenauigkeit beläuft sich jedoch meist auf mehrere Kilometer. Ein Teil der Kurzschlussorte wird nicht erkannt. Bei nicht vermaschten Netzen, wie 25kV/50Hz-Nezten, ermöglicht ein digitaler Fahrleitungsschutz die Eingrenzung des Kurzschlussortes auf bestenfalls 500m. Eine genaue Lokalisierung ist auch hier derzeit nicht möglich.

Alternativ wäre es möglich, Sensoren, die bspw. zur Detektion eines Kurzschlusses in einer Fahrleitungsanlage ausgebildet sind, durch Kommunikation über GSM o.ä. auszulesen. Ein solcher Sensor bzw. ein entsprechender Funksensor weist jedoch einen sehr hohen Energie- bzw. Strombedarf für die Kommunikation auf. Ebenfalls nachteilig sind die vergleichsweise hohen Kosten für die entsprechenden Funksensoren mit der notwendigen Elektronik.

Die Offenlegungsschrift US 2008/296441 A1 zeigt eine Vorrichtung zum Detektieren eines Schienenbruchs oder eines Zugs. Hierbei sind mehrere Stromsensoren vorgesehen, welche in einem Schienensystem angeordnet sind, wobei eine Kommunikation zwischen den Stromsensoren über das Schienensystem drahtgebunden durchgeführt wird.

Es besteht daher ein dringender Bedarf nach einer Möglichkeit, eine Störung in einer Fahrleitungsanlage oder allgemeiner Informationen über Betriebszustände automatisch zu erkennen und entsprechende Informationen sicher und schnell an eine die Informationen verarbeitende Stelle weiterzuleiten.

Diese Aufgabe wird durch die in den unabhängigen Ansprüchen angegebenen Erfindungen gelöst. Vorteilhafte Ausgestaltungen ergeben sich aus den abhängigen Ansprüchen.

Die Lösung der Aufgabe ergibt sich durch den Einsatz einer Vielzahl von Funksensorknoten, die Fehler in der Fahrleitungsanlage detektieren und ein entsprechendes Fehlerdiagramm an eine diese Informationen verarbeitende Stelle weiterleiten und somit Störungen einfach identifizieren. Eine solche die Informationen verarbeitende Stelle kann bspw. eine Zentrale wie etwa eine Instandhaltungsleitstelle sein. Ausgehend von der Zentrale, in der die Informationen eingehen und ausgewertet werden, werden dann die notwendigen Schritte zur Störungsbehebung eingeleitet.

Die Informationen, die für eine Störungsortung oder Fehlererkennung von Fahrleitungsanlagen relevant sind, werden innerhalb eines drahtlosen, vorteilhafterweise linearen Funksensornetzes, welches entlang der Strecke verteilt ist und welches aus einer Vielzahl von Funksensorknoten besteht, kabellos erfasst und weitergeleitet.

Erfindungsgemäß wird eine Anordnung zur Überwachung eines Betriebsparameters einer Fahrleitungsanlage umfassend eine Vielzahl von Funksensorknoten vorgeschlagen, wobei die Funksensorknoten an unterschiedlichen Orten in der Fahrleitungsanlage installiert sind. Die Funksensorknoten weisen jeweils zumindest einen Sensor zur Überwachung des Betriebsparameters auf. Zumindest einige der Funksensorknoten bilden ein drahtloses Netzwerk, über das per Funk ein von einem ersten Funksensorknoten des Netzwerkes erstelltes und ausgesendetes Datenpaket, insbesondere ein Fehlertelegramm, an eine Zentrale der Fahrleitungsanlage übertragbar ist.

Vorteilhafterweise weisen zumindest einige der Funksensorknoten eine Sende-Empfangseinrichtung auf, über die das vom ersten Funksensorknoten ausgesendete Fehlertelegramm empfangen und anschließend über einen oder mehrere weitere Funksensorknoten des Netzwerkes oder direkt an die Zentrale weitergeleitet wird. Hierdurch wird erreicht, dass die Funksensorknoten nur eine vergleichsweise geringe Reichweite aufweisen müssen. Nur für den Fall, dass derjenige Funksensorknoten, der in unmittelbarer Nachbarschaft zur Zentrale installiert ist, einen Fehlerfall detektiert, wird das Fehlertelegramm direkt vom detektierenden Funksensorknoten an die Zentrale übertragen.

In einer vorteilhaften Ausgestaltung ist das Netzwerk aus Funksensorknoten ein lineares Netzwerk. Weiterhin vorteilhaft ist es, wenn das Netzwerk nach Art eines ad-hoc Netzwerkes arbeitet.

Dadurch, dass in einer weiteren vorteilhaften Ausgestaltung zumindest einer der Funksensorknoten eine Sensorbank mit mehreren Sensoren zur Überwachung mehrerer verschiedener Betriebsparameter aufweist, wird erreicht, dass zur Überwachung mehrerer verschiedener Betriebsparameter nicht eine entsprechend größere Zahl von Funksensorknoten installiert sein muss.

Um auch Bauteile der Fahrleitungsanlage überwachen zu können, die sich nicht unmittelbar am Montageort der Funksensorknoten befinden, wird in einer weiteren Ausführungsform zusätzlich zumindest ein Funksensor zur Überwachung eines Betriebsparameters der Fahrleitungsanlage eingesetzt. Dieser ist einem der Funksensorknoten zugeordnet und steht in einer Funkverbindung mit dem zugeordneten Funksensorknoten, wobei über diese Funkverbindung Daten des Funksensors an den Funksensorknoten übertragbar sind.

Zumindest einige der Funksensorknoten sind erfindungsgemäß energieautark ausgebildet. Dadurch wird vorteilhafterweise erreicht, dass keine Kabelzuführungen zur Energieversorgung vorgesehen sein müssen und dass keine Batterie o.ä. benötigt werden, so dass der Wartungsaufwand diesbezüglich minimal wird.

Das Fehlertelegramm enthält Informationen, aus denen der Ort und/oder die Art des Fehlers hervorgehen. Demzufolge ist es mit einfachen Mitteln möglich, den Fehlerort zu ermitteln.

Im erfindungsgemäßen Verfahren zur Überwachung zumindest eines Betriebsparameters einer Fahrleitungsanlage mit einer Vielzahl von Funksensorknoten, welche an unterschiedlichen Orten in der Fahrleitungsanlage installiert sind und welche jeweils einen Sensor zur Überwachung eines der Betriebsparameter aufweisen, bilden zumindest einige der Funksensorknoten ein drahtloses Netzwerk. In einem ersten Funksensorknoten wird ein Telegramm erstellt, welches über das drahtlose Netzwerk an eine Zentrale der Fahrleitungsanlage übertragbar ist.

Zumindest einige der Funksensorknoten weisen eine Sende-Empfangseinrichtung auf, über die das vom ersten Funksensorknoten ausgesendete Telegramm empfangen und anschließend über einen oder mehrere weitere Funksensorknoten des Netzwerkes oder direkt an die Zentrale weitergeleitet wird.

Das Telegramm wird von einem weiterleitenden Funksensorknoten aus jeweils zu einem dem weiterleitenden Funksensorknoten benachbarten Funksensorknoten übertragen, bis die Zentrale in der Reichweite eines der weiterleitenden Funksensorknoten liegt. Damit ist gewährleistet, dass das Verfahren auch mit Funksensorknoten mit vergleichsweise geringer Reichweite durchführbar ist.

Vorteilhafterweise gewinnen zumindest einige der Funksensorknoten die zum Betrieb des jeweiligen Funksensorknotens benötigte Energie aus der Umgebung des jeweiligen Funksensorknotens.

In einer weiteren vorteilhaften Ausgestaltung gehen die Funksensorknoten in einen Energiesparmodus über, wenn kein Fehlertelegramm weiterzuleiten ist.

Die erfindungsgemäße Lösung weist neben den oben genannten Vorteilen die folgenden Vorteile auf:
- Zuverlässige Erkennung und Ortung von Störungen und Fehlern in der Fahrleitungsanlage von einer zentralen Stelle aus.
- Eine Vor-Ort Suche der Störungen, bspw. durch Ablaufen der Strecke ist nicht mehr erforderlich.
- Eine Störungsbehebung kann direkt und schneller erfolgen, als bisher.
- Es können auch Störungen und Fehler erkannt werden, die bisher nicht identifiziert werden konnten, bspw. Kurzschlüsse.
- Durch eine zuverlässige Störungserkennung können Folgestörungen und -schäden verringert werden.
- Verkabelungen und aufwendige Montage im Gegensatz zu bisherigen Erkennungssystemen entfallen.

Mit der erfindungsgemäßen Lösung können durch eine kontinuierliche und zuverlässige Überwachung der Funktionalität und einer Störungs- bzw. Ausfallerkennung einzelner Fahrleitungskomponenten und -bauteile Störungen schnell identifiziert und die entsprechende Information schnell an eine Zentrale weitergeleitet werden. Außerdem lassen sich Schäden, Ausfälle und Folgeschäden durch eine zuverlässige Ortung zielgerichtet finden und zügig beheben. Die Auswirkungen einer Störung lassen sich somit abmildern.

Weitere Vorteile, Merkmale und Einzelheiten der Erfindung ergeben sich aus dem im Folgenden beschriebenen Ausführungsbeispiel sowie anhand der Zeichnungen.

Dabei zeigt:
- Figur 1: eine Fahrleitungsanlage mit mehreren Funksensorknoten,
- Figur 2: einen Funksensorknoten.

In den Figuren sind identische bzw. einander entsprechende Bereiche, Bauteile, Bauteilgruppen oder Verfahrensschritte mit denselben Bezugsziffern gekennzeichnet.

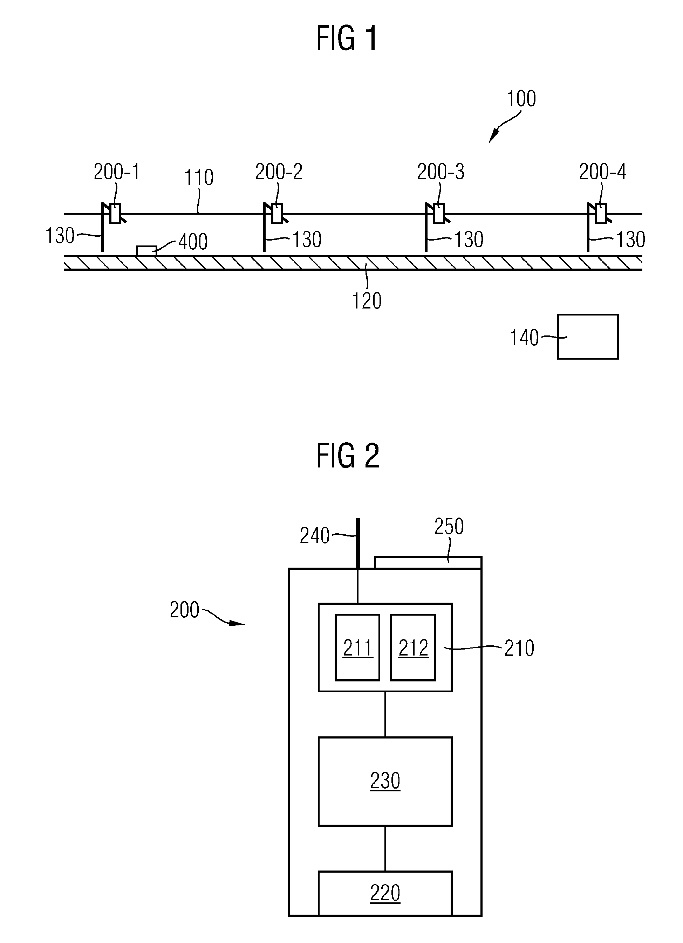

Die Figur 1 zeigt eine Fahrleitungsanlage 100 mit einer Oberleitung 110, einer Strom- bzw. Fahrschiene 120 und mehreren Masten 130. Weiterhin ist eine Zentrale 140 dargestellt, die bspw. eine Instandhaltungsleitstelle sein kann. Weitere Bauteile sind der Übersichtlichkeit wegen nicht dargestellt.

In der Fahrleitungsanlage 100 sind mehrere Funksensorknoten 200-i (mit i = 1, 2, 3, 4...) zur Überwachung der Betriebsparameter der Fahrleitungsanlage 100 installiert. Zu überwachende Betriebsparameter sind allgemein ausgedrückt diejenigen Parameter der Fahrleitungsanlage, die für einen ungestörten Betrieb der Fahrleitungsanlage relevant sind. Bspw. kann die erfindungsgemäße Technologie in einer Fahrleitungsanlage vorteilhaft für die Fernüberwachung von Schienenpotenzialen, Spannungssicherungen, Kurzschlüssen, Isolatorüberschlägen, Temperaturen von Leitern und Bauteilen, Schalterstellungen, Funktionen der Nachspanneinrichtungen und vom Fahrdrahtverschleiß eingesetzt werden. Ein Funksensorknoten 200 beinhaltet z.B. einen Stromsensor, welcher das Erkennen von Kurzschlüssen ermöglicht. Eine weitere Möglichkeit ist der Einsatz eines Spannungssensors, der typische Sollspannungen überwacht. Typischerweise werden je nach zu überwachendem Parameter bspw. Spannungs-, Strom-, Beschleunigungs- oder Temperatursensoren verwendet, die sämtlich in der im Zusammenhang mit der Figur 2 erwähnten Sensorbank 220 integriert sein können.

Die Funksensorknoten 200 sind an jedem Fahrleitungsmast 130 der Fahrleitungsanlage 100 installiert. Alternativ oder zusätzlich, hier aber nicht dargestellt, können Funksensorknoten 200 zumindest jeweils in Abständen von bspw. einigen wenigen hundert Metern installiert sein. Der maximale Abstand zwischen zwei benachbarten Sensorknoten richtet sich dabei nach der jeweiligen Reichweite der Funksensorknoten.

Die Funksensoren bzw. Funksensorknoten 200, die in der erfindungsgemäßen Lösung zum Einsatz kommen, sind an sich bekannt. In der Figur 2 ist ein solcher Funksensorknoten 200 exemplarisch dargestellt. Er enthält typischerweise zumindest eine drahtlose Sende-Empfangseinrichtung 210 mit einem Sender 211 und einem Empfänger 212, zumindest einen Sensor 220 und eine Antenne 240. Die Sende-Empfangseinrichtung 210 kann zum Einen dazu dienen, mit dem Sender 211 die mit dem oder den Sensoren 220 detektierten Daten drahtlos an einen weiteren Funksensorknoten oder an Zentrale 140 zu übertragen. Zum Anderen können mit dem Empfänger 212 der drahtlosen Sende-Empfangseinrichtung 210 Daten von einem anderen Funksensorknoten oder von der Zentrale 140 empfangen werden, letzteres bspw. um den Sensor 220 oder eine im Funksensor 200 enthaltene Elektronik 230, eine CPU o.ä. umzuprogrammieren oder um den Funksensorknoten zu konfigurieren. Bspw. kann hier zur Kommunikation der Funkstandard IEEE 802.15.4 o.ä. zum Einsatz kommen. Der Sensor 220 des Funksensorknotens 200 wird wie beschrieben verwendet, um bspw. am Ort des Funksensorknotens 200 vorherrschende Betriebsparameter wie etwa Ströme, Spannungen und/oder Temperaturen zu ermitteln. Der Funksensorknoten kann natürlich auch so ausgelegt sein, dass der Sensor 220 als Sensorbank ausgebildet ist, die mehrere unterschiedliche Sensoren aufweist (nicht dargestellt), mit denen unterschiedliche Parameter gemessen werden können, bspw. Strom, Spannung und Temperatur. Es ist also durchaus möglich, mehrere verschiedene Sensoren in einem Funksensorknoten 200 zu integrieren, um verschiedene Parameter ermitteln zu können, ohne mehrere einzelne Funksensorknoten einsetzen zu müssen. Die Elektronik 230 ist sowohl mit dem Sensor 220 als auch mit der Sende-Empfangseinrichtung 210 verbunden, um bspw. die Sensordaten zu verarbeiten und über die Antenne 240 die unten beschriebene Kommunikation mit anderen Funksensorknoten und/oder einer Zentrale o.ä. zu gewährleisten.

Vorteilhafterweise sind die Funksensorknoten 200-i energieautark, d.h. sie entnehmen die zum Betrieb des Funksensorknotens 200-i benötigte Energie aus der Umgebung. Bspw. kann ein Solarmodul 250 zur Energieversorgung vorgesehen sein. Alternativ wäre auch eine transformatorische Kopplung an wechselstromdurchflossene Leiter denkbar. Alternativ könnte es sich auch anbieten, die Funksensorknoten unter Ausnutzung der Windenergie zu betreiben.

Im Beispiel der Figur 1 ist der Sensor 220 des Funksensorknotens 200-2 ein Stromsensor, mit dem Kurzschlüsse in der Fahrleitungsanlage 100 detektiert werden sollen. Bei Erkennung eines Fehlerfalles, d.h. allgemein bei einer Abweichung des mit dem Sensor 220 ermittelten Betriebsparameters von einem Sollwert, wird in der Elektronik 230 des Funksensorknotens 200-2 ein Fehlertelegramm erstellt, welches Auskunft über Ort und Art des Fehlers gibt. Das Fehlertelegramm wird mit Hilfe der Sende-Empfangseinheit 210 an einen Funksensorknoten 200-3 in Reichweite des Funksensorknotens 200-2 übertragen. Der Funksensorknoten 200-3 überträgt das Fehlertelegramm seinerseits an einen weiteren Funksensorknoten 200-4. Diese Weiterleitung erfolgt so lange, bis das Fehlertelegramm in der Zentrale 140 empfangen wird.

Die Übertragung des Fehlertelegramms erfolgt demzufolge durch sog. Multihopping und Informationsweiterreichung von Sensorknoten zu Sensorknoten.

In der Zentrale 140 erfolgt die Auswertung des Fehlertelegramms, um schließlich ggf. die notwendigen Maßnahmen zur Behebung des detektierten Fehlers in die Wege zu leiten. Vorteilhafterweise wird das Fehlertelegramm einfach zwischen räumlich benachbarten Funksensorknoten übertragen, so dass die Reichweite der einzelnen Funksensorknoten nicht außergewöhnlich groß sein muss. Der Funksensorknoten 200-1 ist in diesem Fall nicht in das drahtlose Netzwerk aus Funksensorknoten eingebunden. Grundsätzlich ist es aber auch möglich, das Netzwerk aus sämtlichen Funksensorknoten 200-i aufzubauen.

Mit dem so gebildeten drahtlosen Netzwerk aus mehreren Funksensorknoten 200-i ist eine genaue Bestimmung des Fehlerortes möglich, da die Montageorte der Funksensorknoten 200-i in der Zentrale 140 bekannt sind und die entstehenden Fehlertelegramme entweder direkt den Ort oder aber die Kennung des detektierenden Funksensorknotens 200-2 beinhalten im Gegensatz zu bisherigen ungenauen Eingrenzungen.

Das Netzwerk aus Funksensorknoten ist entlang einer Bahnstrecke idealerweise linear arrangiert, d.h. bspw. der Funksensorknoten 200-2 kommuniziert nur mit seinen benachbarten Knoten 200-1 und 200-3. Dementsprechend kommuniziert der Knoten 200-3 nur mit den Knoten 200-2 und 200-4 usw.. Dies hat den Vorteil, dass speziell die Sender 211 der einzelnen Funksensorknoten 200-i keine große Reichweite aufweisen müssen.

Insbesondere kann das Netzwerk nach Art eines sog. "ad-hoc Netzwerkes" ausgebildet sein, bei dem Daten von einem Knoten des Netzes zum nächsten Knoten weitergereicht werden, bis die Daten ein bestimmtes Ziel erreichen.

Aus globaler Sicht ist, bspw. aus Sicht der Zentrale, ist das Netzwerk im Prinzip hierarchisch bzw. baumartig arrangiert, wobei jeder Ast des Baums in sich zunächst einmal ein lineares Netzwerk bildet. Bspw. an einer Weiche der Bahnstrecke gehen dann zumindest zwei weitere, für sich lineare Netzwerke ab.

Andere Topologien des Netzwerks sind grundsätzlich natürlich ebenfalls denkbar, bspw. sternförmig, vermascht oder dezentral. Aufgrund der begrenzten Reichweite der typischen Funksensorknoten bietet es sich aber an, das oben erwähnte lineare Netzwerk zu wählen.

Störungsinformationen werden so entlang der Strecke bis zur Zentrale 140 weitergeleitet. Alternativ würde es ausreichen, die Störungsinformationen zumindest bspw. bis zum nächsten Unterwerk, zum nächsten Schaltposten oder zur nächsten Kuppelstelle zu übertragen. Von dort aus können die Informationen dann via Kabelverbindung zur betreffenden Zentrale weitergegeben werden, wobei auf bereits bestehende Kabelverbindungen, bspw. Kommunikations- oder Stromleitungen, oder bestehende Funkverbindungen zurückgegriffen werden kann, so dass kein zusätzlicher Installationsaufwand entsteht.

Um Energie einzusparen schalten die Funksensorknoten 200-i, wenn keine Informationen bzw. Fehlertelegramme weiterzuleiten sind oder anliegen, in einen Energiesparmodus.

Sollte es bei gewissen Streckenabschnitten nicht erforderlich sein, Funksensorknoten zur Überwachung einzusetzen, können statt dessen auch sog. Repeater verbaut werden, die nur die Aufgabe haben, die Information von Funksensorknoten entlang der Strecke weiterzuleiten. Als Repeater können bspw. Funksensorknoten eingesetzt werden, die entweder keinen Sensor besitzen oder bei denen der Sensor deaktiviert ist o.ä.

Um auch Bauteile der Fahrleitungsanlage 100 überwachen zu können, die sich nicht unmittelbar am Montageort der Funksensorknoten 200-i befinden, können einige oder alle Funksensorknoten 200-i auch so ausgelegt werden, dass sie per Funk zusätzliche, lokale, drahtlose und ggf. energieautarke Sensoren abfragen können. Ein Beispiel für eine solche Anwendung wäre die Schienenpotentialmessung, bei der ein drahtloser Funksensor 400, der einen Spannungssensor aufweist (nicht im Detail dargestellt), im Bereich der Strom- bzw. Fahrschiene 120 montiert ist, der von seinem zuständigen Funksensorknoten 200-1 am benachbarten Mast 130 abgefragt werden kann. Im Fehlerfall wird im Funksensorknoten 200-1 ein Fehlertelegramm erstellt, das in Analogie zu obiger Beschreibung über die Funksensorknoten 200-2, 200-3 und 200-4 an die Zentrale 140 übertragen wird.

Grundsätzlich müssen natürlich nicht alle oben als Funksensorknoten bezeichneten Funksensorknoten

Obige Beschreibung bezog sich darauf, dass speziell für den Fall, dass ein erster Funksensorknoten einen Fehlerfall detektiert, ein Fehlertelegramm vom detektierenden Funksensorknoten erstellt und über das Netzwerk an die Zentrale übermittelt wird. Die erfindungsgemäße Anordnung lässt sich aber auch dazu nutzen, die Sensordaten eines oder mehrerer der Funksensorknoten bspw. in Form eines Telegramms an die Zentrale zu übermitteln, ohne dass ein Fehlerfall vorliegen muss, bspw. zur Protokollierung eines interessierenden Betriebsparameters.

## Patentansprüche

1. Anordnung zur Überwachung eines Betriebsparameters einer Fahrleitungsanlage (100) umfassend eine Vielzahl von Funksensorknoten (200-i), welche an unterschiedlichen Orten in der Fahrleitungsanlage (100) installiert sind, wobei
- zumindest ein erster Funksensorknoten (200-2) aus der Vielzahl der Funksensorknoten (200-i) einen Sensor (220) zur Überwachung des Betriebsparameters aufweist, zumindest einige (200-1, 200-2, 200-3) der Funksensorknoten (200-i) ein drahtloses Netzwerk bilden, über das per Funk ein von dem ersten Funksensorknoten (200-2) des Netzwerkes erstelltes und ausgesendetes Datenpaket, insbesondere ein Telegramm, an eine Zentrale (140) der Fahrleitungsanlage (100) übertragbar ist, wobei zumindest einige der Funksensorknoten (200-i) energieautark ausgebildet sind und die zum Betrieb des jeweiligen Funksensorknotens (200-i) benötigte Energie aus der Umgebung des jeweiligen Funksensorknotens (200-i) gewinnen.

2. Anordnung nach Anspruch 1, **dadurch gekennzeichnet, dass** zumindest einige der Funksensorknoten (200-i) eine Sende-Empfangseinrichtung (210) aufweisen, über die das vom ersten Funksensorknoten (200-2) ausgesendete Telegramm empfangen und anschließend über einen oder mehrere weitere Funksensorknoten (200-3) des Netzwerkes oder direkt an die Zentrale (140) weitergeleitet wird.

3. Anordnung nach Anspruch 1 oder 2, wobei das Netzwerk aus Funksensorknoten ein lineares Netzwerk ist.

4. Anordnung nach einem der vorhergehenden Ansprüche, **dadurch gekennzeichnet, dass** das Netzwerk ein ad-hoc Netzwerk ist.

5. Anordnung nach einem der vorhergehenden Ansprüche, **dadurch gekennzeichnet, dass** zumindest einer der Funksensorknoten (200-i) eine Sensorbank (220) mit mehreren Sensoren zur Überwachung mehrerer verschiedener Betriebsparameter aufweist.

6. Anordnung nach einem der vorhergehenden Ansprüche, **dadurch gekennzeichnet, dass** zusätzlich zumindest ein Funksensor (400) zur Überwachung eines Betriebsparameters der Fahrleitungsanlage (100) vorgesehen ist, welcher einem Funksensorknoten (200-1) zugeordnet ist und in einer Funkverbindung mit dem zugeordneten Funksensorknoten (200-1) steht, wobei über diese Funkverbindung Daten des Funksensors (400) an den Funksensorknoten (200-1) übertragbar sind.

7. Anordnung nach einem der vorhergehenden Ansprüche, **dadurch gekennzeichnet, dass** das drahtlose Netzwerk zusätzlich zumindest einen Repeater aufweist, über den das Telegramm an einen weiteren Repeater, an einen Funksensorknoten (200-i) oder an die Zentrale (140) weitergeleitet wird.

8. Verfahren zur Überwachung zumindest eines Betriebsparameters einer Fahrleitungsanlage (100) mit einer Vielzahl von Funksensorknoten (200-i), welche an unterschiedlichen Orten in der Fahrleitungsanlage (100) installiert sind und welche jeweils einen Sensor (220) zur Überwachung eines der Betriebsparameter aufweisen, wobei zumindest einige (200-1, 200-2, 200-3) der Funksensorknoten (200-i) ein drahtloses Netzwerk bilden und in einem ersten Funksensorknoten (200-2) ein Telegramm erstellt wird, welches über das drahtlose Netzwerk an eine Zentrale (140) der Fahrleitungsanlage (100) übertragen wird wobei zumindest einige der Funksensorknoten (200-i) energieautark ausgebildet sind und eine zum Betrieb des jeweiligen Funksensorknotens (200-i) benötigte Energie aus der Umgebung des jeweiligen Funksensorknotens (200-i) gewinnen.

9. Verfahren nach Anspruch 8, **dadurch gekennzeichnet, dass** zumindest einige der Funksensorknoten (200-i) eine Sende-Empfangseinrichtung (210) aufweisen, über die das vom ersten Funksensorknoten (200-2) ausgesendete Telegramm empfangen und anschließend über einen oder mehrere weitere Funksensorknoten (200-3) des Netzwerkes oder direkt an die Zentrale (140) weitergeleitet wird.

10. Verfahren nach Anspruch 9, **dadurch gekennzeichnet, dass** das Telegramm von einem weiterleitenden Funksensorknoten (200-3) aus jeweils zu einem dem weiterleitenden Funksensorknoten (200-3) benachbarten Funksensorknoten (200-4) übertragen wird, bis die Zentrale (140) in der Reichweite eines der weiterleitenden Funksensorknoten liegt.

11. Verfahren nach einem der Ansprüche 8 bis 10, **dadurch gekennzeichnet, dass** das Netzwerk aus Funksensorknoten ein lineares Netzwerk ist.

12. Verfahren nach einem der Ansprüche 8 bis 11, **dadurch gekennzeichnet, dass** das Netzwerk ein ad-hoc Netzwerk ist.

13. Verfahren nach einem der Ansprüche 8 bis 12, **dadurch gekennzeichnet, dass** zusätzlich zumindest ein Funksensor (400) zur Überwachung eines Betriebsparameters der Fahrleitungsanlage (100) vorgesehen ist, welcher einem Funksensorknoten (200-1) zugeordnet ist und welcher Daten des Funksensors (400) über eine Funkverbindung an den Funksensorknoten (200-1) überträgt.

14. Verfahren nach einem der Ansprüche 8 bis 13, **dadurch gekennzeichnet, dass** die Funksensorknoten (200-i) in einen Energiesparmodus übergehen, wenn kein Telegramm weiterzuleiten ist.

15. Verfahren nach einem der Ansprüche 8 bis 14, **dadurch gekennzeichnet, dass** das drahtlose Netzwerk zusätzlich zumindest einen Repeater aufweist, über den das Telegramm an einen weiteren Repeater, an einen Funksensorknoten (200-i) oder an die Zentrale (140) weitergeleitet wird.

## Claims

1. Arrangement for monitoring an operating parameter of a contact line system (100) comprising a plurality of radio sensor nodes (200-i), which are installed at different positions in the contact line system (100), wherein
- at least a first radio sensor node (200-2) of the plurality of the radio sensor nodes (200-i) comprises a sensor (220) for monitoring the operating parameter, at least some (200-1, 200-2, 200-3) of the radio sensor nodes (200-i) form a wireless network, via which a data packet produced and sent by radio by the first radio sensor node (200-2) of the network, in particular a telegram, can be transmitted to a central unit (140) of the contact line system (100), wherein at least some of the radio sensor nodes (200-i) are embodied as energy-self-sufficient and obtain the energy required for the operation of the respective radio sensor node (200-i) from the environment of the respective radio sensor node (200-i).

2. Arrangement according to claim 1, **characterised in that** at least some of the radio sensor nodes (200-i) comprise a transceiver device (210) via which the telegram sent by the first radio sensor node (200-2) is received and then relayed via one or more further radio sensor nodes (200-3) of the network or directly to the central unit (140).

3. Arrangement according to claim 1 or 2, wherein the network of radio sensor nodes is a linear network.

4. Arrangement according to one of the preceding claims, **characterised in that** the network is an ad-hoc network.

5. Arrangement according to one of the preceding claims, **characterised in that** at least one of the radio sensor nodes (200-i) comprises a sensor bank (220) with a plurality of sensors for monitoring a plurality of different operating parameters.

6. Arrangement according to one of the preceding claims, **characterised in that** additionally at least one radio sensor (400) for monitoring an operating parameter of the contact line system (100) is provided, which is assigned to a radio sensor node (200-1) and is in a radio link with the assigned radio sensor node (200-1), wherein data from the radio sensor (400) can be transmitted via this radio link to the radio sensor nodes (200-1).

7. Arrangement according to one of the preceding claims, **characterised in that** the wireless network additionally comprises at least one repeater via which the telegram is relayed to a further repeater, to a radio sensor node (200-i) or to the central unit (140).

8. Method for monitoring at least one operating parameter of a contact line system (100) with a plurality of radio sensor nodes (200-i), which are installed at different positions in the contact line system (100) and which each comprise a sensor (220) for monitoring one of the operating parameters, wherein at least some (200-1, 200-2, 200-3) of the radio sensor nodes (200-i) form a wireless network and a telegram is produced in a first radio sensor node (200-2), which is transmitted via the wireless network to a central unit (140) of the contact line system (100), wherein at least some of the radio sensor nodes (200-i) are embodied as energy-self-sufficient and obtain the energy required for the operation of the respective radio sensor node (200-i) from the environment of the respective radio sensor node (200-i).

9. Method according to claim 8, **characterised in that** at least some of the radio sensor nodes (200-i) comprise a transceiver (210), via which the telegram sent by the first radio sensor node (200-2) is received and is then relayed via one or more further radio sensor nodes (200-3) of the network or directly to the central unit (140).

10. Method according to claim 9, **characterised in that** the telegram is transmitted by a relaying radio sensor node (200-3) from in each case radio sensor nodes (200-4) adjacent to one of relaying radio sensor nodes (200-3) until the central unit (140) lies within the range of one of the relaying radio sensor nodes.

11. Method according to one of claims 8 to 10, **characterised in that** the network of radio sensor nodes is a linear network.

12. Method according to one of claims 8 to 11, **characterised in that** the network is an ad-hoc network.

13. Method according to one of claims 8 to 12, **characterised in that** additionally at least one radio sensor (400) for monitoring an operating parameter of the contact line system (100) is provided, which is assigned to a radio sensor node (200-1) and which transmits data from the radio sensor (400) via a radio link to the radio sensor nodes (200-1).

14. Method according to one of claims 8 to 13, **characterised in that** the radio sensor nodes (200-i) enter an energy-saving mode if no telegram is to be relayed.

15. Method according to one of claims 8 to 14, **characterised in that** the wireless network additionally comprises at least one repeater, via which the telegram is relayed to a further repeater, to a radio sensor node (200-i) or to the central unit (140).

## Revendications

1. Agencement de surveillance d'un paramètre de fonctionnement d'une installation à ligne de contact (100) comprenant une pluralité de noeuds de capteurs radio (200-i) montés à différents endroits de l'installation à ligne de contact (100),
- au moins un premier noeud de capteur radio (200-2) de la pluralité de noeuds de capteurs radio (200-i) comportant un capteur (220) pour la surveillance du paramètre de fonctionnement, au moins certains (200-1, 200-2, 200-3) des noeuds de capteurs radio (200-i) formant un réseau sans fil via lequel un paquet de données établi et émis par le premier noeud de capteur radio (200-2) du réseau, notamment un télégramme, peut être transmis par radio à un central (140) de l'installation à ligne de contact (100), au moins certains des noeuds de capteurs radio (200-i) étant autonomes en énergie et récupérant l'énergie nécessaire au fonctionnement du noeud de capteur radio respectif (200-i) dans l'environnement du noeud de capteur radio respectif (200-i).

2. Agencement selon la revendication 1, **caractérisé en ce qu'**au moins certains des noeuds de capteurs radio (200-i) comportent un dispositif émetteur-récepteur (210) via lequel le télégramme émis par le premier noeud de capteur radio (200-2) est reçu et ensuite transmis via un ou plusieurs autres noeuds de capteurs radio (200-3) ou directement au central (140).

3. Agencement selon la revendication 1 ou 2, le réseau de noeuds de capteurs radio étant un réseau linéaire.

4. Agencement selon l'une des revendications précédentes, **caractérisé en ce que** le réseau est un réseau ad hoc.

5. Agencement selon l'une des revendications précédentes, **caractérisé en ce qu'**au moins un des noeuds de capteurs radio (200-i) comporte un banc de capteurs (220) comprenant plusieurs capteurs pour la surveillance de plusieurs paramètres de fonctionnement différents.

6. Agencement selon l'une des revendications précédentes, **caractérisé en ce qu'**il est prévu en plus au moins un capteur radio (400) pour la surveillance d'un paramètre de fonctionnement de l'installation à ligne de contact (100), capteur qui est associé à un noeud de capteur radio (200-1) et qui est en communication radio avec le noeud de capteur radio associé (200-1), grâce à cette communication radio des données du capteur radio (400) pouvant être transmises au noeud de capteur radio (200-1).

7. Agencement selon l'une des revendications précédentes, **caractérisé en ce que** le réseau sans fil comporte en plus au moins un répéteur via lequel le télégramme est transmis à un autre répéteur, à un noeud de capteur radio (200-i) ou au central (140).

8. Procédé de surveillance d'au moins un paramètre de fonctionnement d'une installation à ligne de contact (100) comprenant une pluralité de noeuds de capteurs radio (200-i) montés à différents endroits de l'installation à ligne de contact (100) et comportant chacun un capteur (220) pour la surveillance d'un des paramètres de fonctionnement, au moins certains (200-1, 200-2, 200-3) des noeuds de capteurs radio (200-i) formant un réseau sans fil et dans un premier noeud de capteur radio (200-2) étant établi un télégramme, lequel est transmis via le réseau sans fil à un central (140) de l'installation à ligne de contact (100), au moins certains des noeuds de capteurs radio (200-i) étant autonomes en énergie et récupérant l'énergie nécessaire au fonctionnement du noeud de capteur radio respectif (200-i) dans l'environnement du noeud de capteur radio respectif (200-i).

9. Procédé selon la revendication 8, **caractérisé en ce qu'**au moins certains des noeuds de capteurs radio (200-i) comportent un dispositif émetteur-récepteur (210) via lequel le télégramme émis par le premier noeud de capteur radio (200-2) est reçu et ensuite transmis via un ou plusieurs autres noeuds de capteurs radio (200-3) ou directement au central (140).

10. Procédé selon la revendication 9, **caractérisé en ce que** le télégramme est transmis chaque fois depuis un noeud de capteur radio transmetteur (200-3) à un noeud de capteur radio (200-4) voisin du noeud de capteur radio transmetteur (200-3), jusqu'à ce que le central (140) se trouve dans le champ d'un des noeuds de capteurs radio transmetteurs.

11. Procédé selon l'une des revendications 8 à 10, **caractérisé en ce que** le réseau de noeuds de capteurs radio est un réseau linéaire.

12. Procédé selon l'une des revendications 8 à 11, **caractérisé en ce que** le réseau est un réseau ad hoc.

13. Procédé selon l'une des revendications 8 à 12, **caractérisé en ce qu'**il est prévu en plus au moins un capteur radio (400) pour la surveillance d'un paramètre de fonctionnement de l'installation à ligne de contact (100), capteur qui est associé à un noeud de capteur radio (200-1) et qui transmet des données du capteur radio (400) via une liaison radio au noeud de capteur radio (200-1).

14. Procédé selon l'une des revendications 8 à 13, **caractérisé en ce que** les noeuds de capteurs radio (200-i) passent en mode d'économie d'énergie quand il n'y pas de télégramme à transmettre.

15. Procédé selon l'une des revendications 8 à 14, **caractérisé en ce que** le réseau sans fil comporte en plus au moins un répéteur via lequel le télégramme est transmis à un autre répéteur, à un noeud de capteur radio (200-i) ou au central (140).
